# EUROPEAN PATENT SPECIFICATION

(11) **EP 0 763 756 B1**
(45) Date of publication and mention of the grant of the patent: **04.04.2001**
(21) Application number: 96420290.7
(22) Date of filing: 09.09.1996
(51) Int. Cl.: G02B 3/00, G02B 27/22

(54) **Encoded lenticular media**
Kodierte Linsenrastermedien
Milieu lenticulaire encodé

(30) Priority: 15.09.1995 US 3829; 05.12.1995 US 567790
(43) Date of publication of application: 19.03.1997
(73) Proprietor: EASTMAN KODAK COMPANY, Rochester, New York 14650-2201 (US)
(72) Inventor: Young, Richard Dean, Eastman Kodak Company, Rochester, New York 14650-2201 (US); Tuschong, Richard J., Eastman Kodak Company, Rochester, New York 14650-2201 (US)
(74) Representative: Buff, Michel

(56) References cited:
- EP-A- 0 663 603
- US-A- 5 230 990
- US-A- 5 424 553

## Description

The present invention relates generally to lenticular material or media. More particularly, the invention relates to lenticular material or media having encoded portions for precisely locating lenticules in the media.

Sheets of optically transparent material with a periodic lenticular pattern formed on its surface are used for producing 3-dimensional photographic depth visualization effects and minor animation effects in depth imaging products. These imaging effects are best achieved under the proper viewing conditions of a lenticular sheet that is precisely aligned and assembled to a specially designed companion film sheet. Therefore, for lenticular sheets composed of, for instance, parallel conic section lenticules of defined spatial periodicity formed on the surface of an optically transparent polymer sheet, it is important to accurately determine the location of the sheet's lenticular features relative to external datums such as may be found on a companion film sheet for optimizing imaging effects. Moreover, it is also important to precisely determine the spatial position of the lenticules' centerlines and a lenticule's skewness over a length of the sheet, especially if these sheets with optical refractive properties are an integral component of depth imaging products, where the centerline of a particular lenticule is desired to be precisely aligned to features on a companion film sheet. The derived lenticule position measurements are useful for automatically providing lenticular sheet location prior to assembly or interfacing processes.

The centerline position of any lenticule can be calculated within a single viewing area of the sheet. However, to precisely determine the extent of subtle skewness relative to global datums over a significant length of a sheet, it is preferable to measure the lenticule sheet in at least two places separated by a substantial distance to improve the measurement location accuracy for the skewness factor. For the precise alignment of normal lenticular sheet product, defined as having a fully periodic array of lenticules spanning the sheet, it is not reasonable to reliably identify in two separate viewing areas of the sheet, the position of a particular lenticule amongst other periodic lenticules without extensive fixturing, or sheet edge to lenticule registration, or dynamic line follower techniques.

Current techniques used for assembling depth imaging products relate to manually aligning within a small viewing area, the lenticules within a sheet to image datum features on the companion film sheet. The approaches make use of the imaging effects and interaction that can be visualized when a lenticular sheet is in direct contact to the film sheet registration features. This approach can be disadvantaged due to the time consuming nature of manual alignment, and can be subject to human error with regard to placement when very precise alignment is demanded. Another shortcoming of this technique is that it requires the contact interfacing of the lenticular sheet to the film sheet during the alignment process. Furthermore, for a normal lenticular sheet, realignment of the sheet to correct for position errors such as skewness over a significant distance interval along the lenticules can be extremely difficult to discern using the manual approach.

There have been numerous unsuccessful prior art attempts to address one or more of the above problems including US-A-3,884,554 which teaches lenticular sheets designed to generate a diffraction pattern, with areas lacking lenticules forming indicia regions in the observed diffraction pattern. Also, US-A-3,940,788 teaches regular spaced intervals between lenticules to provide a means of low pass filtering in conjunction with a phase grating for eliminating color shading and distortion in color television systems. Further, US-A-5,298,366, describes a means of forming a microlens array and lenticular material incorporating a photoresist methodology. Furthermore, US-A-4,420,527 discloses a process for manufacturing composite periodic lenticular sheets making use of drum casting of radiation cured materials against a molding face onto a base web.

None of the aforementioned prior art solves the problem of automatically locating in a precise manner the position of the lenticule features within a lenticular media, and correcting the location of the media based on the measurement information derived therefrom.

It is, therefore, an object of this invention to provide lenticular media having intrinsic features for automatically locating lenticules in the media.

It is a feature of the invention to provide an encoded portion adjoining an arrangement of lenticules located on the lenticular media.

It is an advantage of the present invention that when it is desired to locate the position of lenticules in the lenticular media, the position of the encoded lenticular portion in alignment and registration therewith can be sensed and thereby provides an accurate means of determining the desired lenticule location.

Another advantage of the present invention is that the generation of encoded portion on pattern forming surfaces requires only modifcations of existing cutting tool engagement process and does not require secondary tooling nor secondary tooling passes.

To accomplish these and other objects of the invention, there is provided, in one aspect of the invention, a lenticular material or media, such as disclosed in claim 1, that has at least one encoded portion adjoining a main portion. The encoded portion is configured to provide alignment and registration for precisely determining the location of the main portion. From US-A-5 424 553, a lenticular media is known according to the preamble of claim 1.

In another aspect of the invention, an article of manufacture has an encoded portion and main portion as configured and described above.

Yet another aspect of the invention is a method such as disclosed in claim 7 for forming a lenticular media pattern having a main portion and encoded portions thereon. The encoded portion is provided for alignment and registration of the main portion. The method includes providing a first surface for receiving a negative lenticular media pattern. Further, a cutting tool having a second surface is provided for imparting the negative lenticular media pattern in the first surface. Moreover, a third surface is provided for receiving the negative lenticular media pattern from the first surface. The second surface is engageably contacted only in predetermined regions of the first surface so as to form the main portion and encoded portion of the negative lenticular media pattern on the first surface. In this embodiment, the second surface has geometry for imparting the negative lenticular media pattern in the first surface. Finally, the step of impressing the negative lenticular media pattern of the first surface into contact with the third surface is provided thereby forming a lenticular media pattern in the third surface. The formation of this pattern in the third surface defines lenticular media.

The foregoing as well as other objects, features and advantages of this invention will become more apparent from the appended Figures, wherein like reference numerals denote like elements, and wherein:
Figure 1 is a partial section of the lenticular media with an encoded portion;
Figures 2-3 are partial cross-sectional views of lenticular media with various encoded portions;
Figures 4-5 are partial cross-sectional views of a chill roll with encoded portion;
Figures 6-9 are partial cross-sectional views of a chill roll with encoded portion having non-standard width (w₂);
Figures 10-12 are partial cross-sectional views of a chill roll with variant conic section geometries.

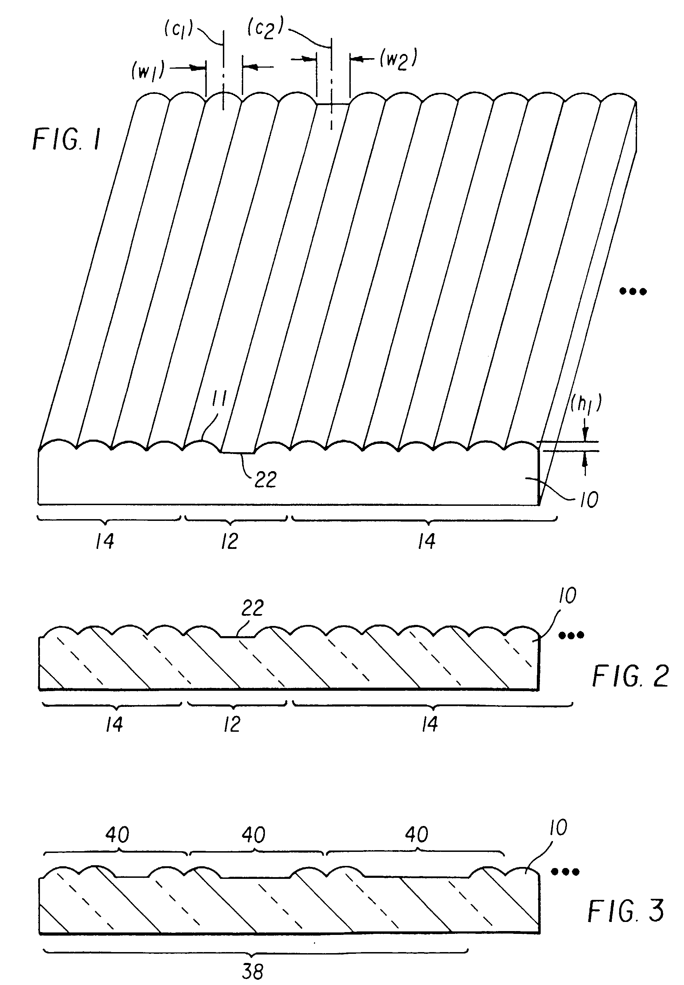

Turning now to the drawings, and in particular to Figs. 1-3, the article of manufacture, alternately referred to as lenticular material or media, **10**, in accordance with the principles of the invention is illustrated. Broadly defined, the article of manufacture, or lenticular media, **10** comprises an encoded portion **12** adjoined to a main portion **14**. The encoded portion or absent lenticule **12** is positioned relative to the main portion **14** so as to provide alignment and registration for precisely determining the location of the main portion **14**. One such device for measuring the location of the main portion in lenticular media is an optical sensing device described in US patent application 08/567827. The main portion **14** comprises a plurality of lenticules **16** formed therein. Lenticules **16** are preferably cylinders of conic sections, although other geometric shapes, such as triangular, etc, are contemplated.

For depth imaging type systems, the alignment precision in the lateral offset and skew between the lenticular media **10** and companion film sheet (not shown) are most preferred for desired special imaging effects of 3-dimensional depth photography and minor animation of images. Therefore, it is important to precisely determine the initial position of the parallel conic section lenticules **16** most preferably used in these systems, to enable precision alignment to the film sheet image in subsequent assembly processes (not shown). In a preferred embodiment of the invention, a distinguishable encoded portion **12** is introduced into the lenticular media **10** that will intrinsically permit absolute position sensing measurements along the entire length of lenticular media **10**, as seen in Fig. 1. As shown in Figures 2 and 3, the encoded portion **12** may include a pattern of variant conic sectioned lenticules **16** within a preferred normal periodic array of lenticules spanning the lenticular media **10**. Encoded portion **12** comprises preferably a planar region **22** characterized by width (w₂) and a centerline (c₂) defined as the midpoint of width (w₂). The cylindrical conic section lenticules **16** are characterized by height (h), width (w₁) and a centerline (c₁) which is defined as the midpoint of width (w₁). We have found that best results are obtained when w₂ is substantially equal to w₁, although either one may be greater than or less than the other.

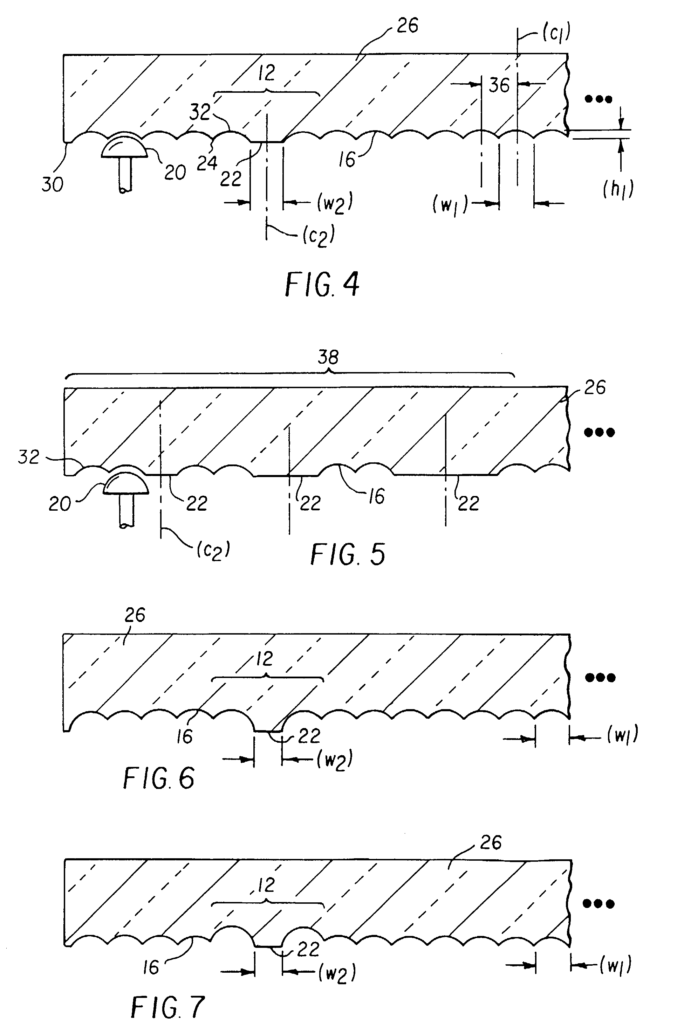

In order to most effectively introduce the encoded portion, or absent lenticule, **12** into the lenticular media **10**, we have found that it is preferable to first produce the encoded portion **12** in a first surface, also sometimes referred to as chill roll, or mold face, **26** (Figs. 4 & 5). This has advantages over modifying already formed fully periodic lenticular media **10** in the form of, for example, plastic sheets via a media post-processing means, such as, mechanical machining or laser processing the lenticules on the sheets themselves. Given this, we think it is preferable to modify the surface of the mold face **26** or lenticular forming mechanisms, as described below. The lenticular media **10** can be formed by a number of manufacturing processes including injection molding and compression molding. However, we have found that the most preferred way to form lenticular media **10** is by an extrusion process wherein a plastic material is impressed against the first surface, such as a chill roll, **26** as described below.

As an example, for the extrusion process incorporating a rotating chill roll serving as the mold face, one can form a negative lenticule profile on the chill roll **26** as depicted in Figure 4, by machining into the nominal surface of the chill roll **26** the negative relief of a lenticule **16** using a second surface, or cutting tool, **20** of a geometry matching the lenticule shape. After precisely cross-indexing either the chill roll **26** or cutting tool **20** at a lenticule pitch interval **36**, this profile cutting machining cycle is then normally repeated until the negative relief lenticule feature pattern spans the entire active area of the chill roll **26**.

To introduce the encoded portion **12** onto the surface **30** of chill roll **26**, the previous second surface, or cutting tool, **20** engagement process would be the same except that the existing tool **20** is not in contact with the surface **30** of chill roll **26** during the interval where an encoded portion **12** is desired. In Figure 4, the plunge depth of cutting tool **20** is such that the height (h) between the peak **32** and the cusp point **24**, formed by the intersection profile minima of adjacent conic section lenticules **16**, correspond with the original nominal width (w₂) of the planar region **22** of the encoded portion **12**. Thus, we have found that it is preferred that width (w₂) of the encoded portion **12** is equal to the width (w₁) of the nominal lenticule **16** ofthe main portion **14** of the lenticule media **10**. The precision cross-indexing means for advancing to the next pitch is still an inherent part of this engagement process, so that the centerline (c₂) of the encoded portion **12** can be precisely maintained as an integral multiple of lenticule pitch **36** (Fig. 4) in relation to all other periodic lenticule centerlines (c₁) or cusp point of lenticule. To generate a series of encoded portions **12** which are a function of spatial location defined as an array of encoded lenticular regions **38** as shown in Fig. 5, the second surface or tool **20** would not be permitted to contact the surface **30** of chill roll **26** in these selected regions. As previously described, the spatial relationship of the encoded portion **12** to centerline pitch **36** of lenticules **16** are precisely maintained due to the cross-indexing drive positioning accuracy being the same whether the cutting tool **20** is engaged or not in contact with the first surface or chill roll **26** for a given pitch.

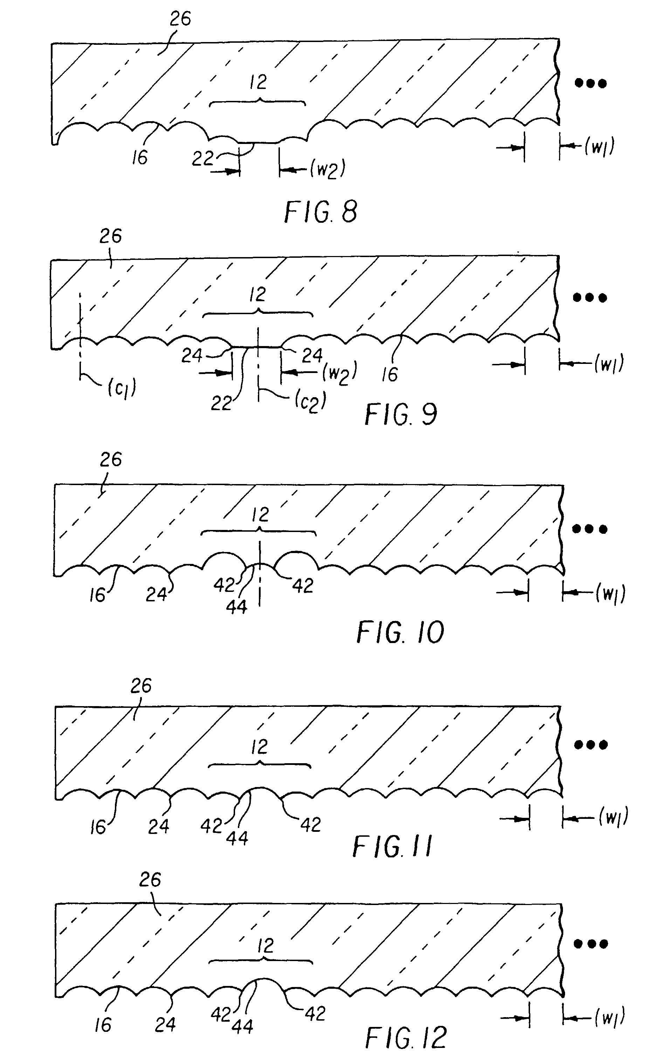

Creating an encoded portion **12** or a region **38** of encoded portions **12** of non-standard planar region widths (w₂) that is still on centerline pitch with adjacent lenticules **16** on the main portion **14** can be achieved to further qualify this encoded portion **12** or region **38** as a distinct alignment feature. The altering of width (w₂) of planar region **22** of encoded portion **12** can be accomplished by further modifying the tool **20** engagement process as described below. As an example, to obtain the cross-section profile illustrated in Figure 6 with planar region **22** of encoded portion **12** less than the standard width (w₁) of a lenticule **16,** the plunge depth of tool **20** for all nominal lenticules **16** is deeper than previously described. Another means is to increase the plunge depth of tool **20** to the two adjacent lenticules **16** bounding the planar region **22** of encoded portion **12**, resulting in a cross-section profile in the chill roll **26**, as illustrated in Figure 7 where width (w₂) of planar region **22** is now narrower than standard width (w₂) by at least 2% of standard width (w₂). Similarly, by decreasing the depth of the tool plunge to adjacent bounding lenticules **16** to the planar region **22** of encoded portion **12**, results in a cross-section profile in the chill roll **26**, as illustrated in Figure 8 where the width (w₂) of the planar region **22** is now wider than standard width (w₂). Another means of increasing the width (w₂) of the planar region **22** of encoded portion **12** is to offset the cutting index centerline position of the two adjacent lenticules **16** to the planar region **22** resulting in the cross-section profile in the chill roll **26**, as illustrated in Figure 9. These described methods provide the shifting of the cusp points **24** associated with the encoded portion **12** off pitch in order to further qualify the distinct alignment feature. The associated centerline (c₂) from the pair-wise cusp points **24** about the planar region **22** feature is still on-pitch with the centerlines (c₁) of the plurality of periodic lenticules **16**.

In a preferred embodiment, the lenticular media **10** has at least one encoded portion **12** having a planar region **22** (as previously described) of predetermined widths (w₂) and centerline (c₂) that is adjoined to at least one lenticule **16** having a predetermined height (h), width (w₁) and centerline (c₁), the adjoined encoded portion **12** and lenticule **16** forming an encoded lenticular region **40**. Moreover, in this embodiment of lenticular media **10**, a plurality of encoded lenticular regions **40** are adjoined to form an array of encoded lenticular regions **38**. Each encoded lenticular region **40** comprises an encoded portion **12** having a planar region **22** and at least one lenticule **16**. As indicated above, the planar region **22** and the lenticule **16** are characterized by predetermined width (w₂) and centerline (c₂) and height (h), width (w₁) and centerline (c₁), respectively.

Other machining means requiring a secondary tool or a secondary pass of the first tool to generate a special distinct alignment feature on the chill roll **26** are not preferred due to the preference for extremely accurate position registration of centerline pitch of lenticule **16**, especially in regard to the distinct alignment feature. These methodologies could introduce additional position errors of the encoded portion **12** due to the seating of the secondary tool in relation to the first tool as well as positioning errors attributed to indexing repeatability of any secondary pass in relation to the initial pass of the tool. Another means of generating an encoded portion **12** is to modify the existing negative relief pattern of periodic lenticules **16** on the chill roll **26** by machining down certain cusp points **24** on the chill roll **26** until a flat is formed between the peaks of adjacent lenticules. This is not as advantaged because of the secondary machining process to the chill roll and more importantly the resultant encoded portion **12** now corresponds with a flat zone spanning two lenticule pitch widths at the lenticules' peak elevation rather than a singular planar region at chill roll surface level **30**. This can be significant when an efficient spatial encoding scheme including encoded portions **12** as single lenticule widths (w₁) in the pattern is employed.

Alternatively to the preferred alignment feature of the encoded portion **12**, one could spatially encode an alignment feature consisting of variant conic sections using the existing cutting tool **20** designed for placing nominal geometry lenticules **16** into surface **30** of chill roll **26**. Simplified representations are shown in Figures 10-12 for introducing into surface **30** of chill roll **26**, various variant conic section alignment features with intrinsic modified cusp point **42** location shifts to distinguish them from cusp points **24** of normal periodic lenticules **16.** In Figure 10, the plunge depth of tool **20** is increased for the two lenticules **16** bounding the alignment feature **44** of encoded portion **12**. This results in modified cusp points **42** associated with the encoded portion **12** which are symmetrically shifted toward the centerline (c₂) of encoded portion **12**, and these modified cusp points **42** are no longer on pitch with all other cusp points **24** associated with the plurality of periodic nominal depth lenticules. Similarly, by decreasing the plunge depth of tool **20** for the two lenticules **16** bounding the alignment feature **44** of encoded portion **12**, as shown in Figure 11, results in modified cusp points **42** shifted outward from centerline (c₂) of encoded portion **12**. Figure 12 depicts conic section variants with the encoded portion **12** formed by a deeper tool plunge of alignment feature **44** of encoded portion **12,** creating modified cusp points **42** of the encoded portion **12** which are shifted symmetrically away from the centerline (c₂) of the encoded portion **12.** For the variant conic section examples shown in Figures 10-12, the pair-wise modified cusp points **42** defined as those symmetric about the encoded portion **12** can be used to calculate the centerline (c₂) of the encoded portion **12** by a spatial mid-point calculation. Other spatial encoding schemes could also be envisioned involving complex patterns of these variant conic sections placed as a function of lateral location within lenticular media **10**. The cutting process for chill roll **26** would involve varying the cutting depth at selected lenticule centerline (c₁) positions to obtain distinct conic sections as a function of location. The centerline pitch of each variant conic section feature is precisely maintained due to the cross-indexing drive precision being maintained at various plunge depths of the cutting tool **20**.

Once the chill roll, or mold face, **26** has the registration feature such as encoded portion **12,** the manufacturing process for the lenticular media **10** with special encoded portion **12** can proceed by one ofthe lenticular product forming methods enumerated previously. The transference of the main portion **14** with the encoded portion **12** onto a third surface, preferably a transparent surface such as a transparent plastic sheet or glass (not shown), produces lenticular media **10** with an alignment feature to facilitate subsequent precision placement and registration of lenticular sheets. Furthermore, the planar region **22** of encoded portion can be used for the guidance and registration of media finishing processes to lenticular media **10**, such as slitting media to a predetermined size along encoded portion. For example, a slitter knife (not shown) in pressured contact with a planar region **22** of lenticular media **10** would be guided and slit down the channeled feature formed by planar region **22** and lenticules **16** adjoining planar region **22** of extruded lenticular media **10**.

## Claims

1. A lenticular media (10) comprising at least one encoded portion (12) adjoining a main portion (14), wherein the encoded portion (12) is positioned to provide alignment and registration for precisely determining the location of the main portion (14) and characterized in that :
the main portion (14) comprises a plurality of lenticules (16), each one of said plurality of lenticules (16) comprises a cylindrical conic section having a height (h), width (w1), and a centerline (c1) defined by the midpoint of the width (w1), and
the encoded portion comprises a substantially planar region having a width (w2) and a centerline (c2), and
the width (w2) of the substantially planar region is substantially equal to the width (w1) of the cylindrical conic section. .

2. The lenticular media (10) as claimed in claim 1 characterized in that the media comprises a web.

3. The lenticular media (10) as claimed in claim 1 characterized in that the media comprises sheet form.

4. The lenticular media (10) as claimed in claim 1 characterized in that the encoded portion (12) comprises a plurality of planar regions (22), each of the planar regions (22) being separated by at least one lenticule (16).

5. The lenticular media (10) recited in Claim 1 characterized in that at least one encoded portion (12) having a planar region (22) of predetermined width (w₂) and centerline (c2) is adjoined to at least one lenticule (16) having a predetermined height (h), width (w1) and centerline (c1) forming an encoded lenticular region (38).

6. The lenticular media (10) recited in Claim 5 characterized in that a plurality of encoded lenticular regions (40) are adjoined to form an array of encoded lenticular regions (38), and wherein each one of said encoded lenticular regions (40) comprises an encoded portion (12) having a planar region (22) and at least one lenticule (16), the planar region (22) and the lenticule (16) being characterized by predetermined width (w₂) and centerline (c₂) and height (h), width (w₁) and centerline (c₁), respectively.

7. A method of forming lenticular media (10) having a main portion (14) and an encoded portion (12) therein, the encoded portion (12) being provided for alignment and registration of the main portion (14), the method comprising the steps of:
providing a first substantially planar surface (30) for receiving a negative lenticular media pattern;
providing a cutting tool having a second surface (20) of a geometry matching the lenticular shape; the method being characterized by:
machining the negative lenticular media pattern (32) only into predetermined regions of the first surface (30) by engageably contacting said cutting tool (20) with said predetermined regions so as to form the main portion and encoded portion of the negative lenticular media pattern;
providing a third surface for receiving the negative lenticular media pattern from the first surface; and
impressing the negative lenticular media pattern of the first surface into contact with the third surface thereby forming a lenticular media pattern in the third surface.

## Patentansprüche

1. Linsenrastermaterial (10) mit mindestens einem codierten Abschnitt (12), der an einen Hauptabschnitt (14) angrenzt und derart angeordnet ist, dass er zur Ausrichtung und Registrierung des Hauptabschnitts (14) dient, um dessen Lage genau zu bestimmen, **dadurch gekennzeichnet,** dass
- der Hauptabschnitt (14) eine Vielzahl von Linsen (16) umfasst, von denen jede einen zylindrisch konischen Abschnitt mit einer Höhe (h), einer Breite (w1) und einer durch den Mittelpunkt der Breite (w1 ) verlaufende Mittellinie (c1) aufweist,
- der codierte Abschnitt einen im wesentlichen ebenen Bereich mit einer Breite (w2) und einer Mittellinie (c2) umfasst, und dass
- die Breite (w2) des im wesentlichen ebenen Bereichs gleich der Breite (w1) des zylindrisch konischen Abschnitts ist.

2. Linsenrastermaterial (10) nach Anspruch 1, dadurch gekennzeichnet, dass das Material ein bahnförmiges Material umfasst.

3. Linsenrastermaterial (10) nach Anspruch 1, dadurch gekennzeichnet, dass das Material ein bogenförmiges Material umfasst.

4. Linsenrastermaterial (10) nach Anspruch 1, dadurch gekennzeichnet, dass der codierte Abschnitt (12) eine Vielzahl von ebenen Bereichen (22) umfasst, von denen jeder durch mindestens eine Linse (16) getrennt ist.

5. Linsenrastermaterial (10) nach Anspruch 1, dadurch gekennzeichnet, dass mindestens ein codierter Abschnitt (12) mit einem ebenen Bereich (22) mit vorbestimmter Breite (w2) und Mittellinie (c2) an mindestens eine Linse (16) mit vorbestimmter Höhe (h), Breite (w1) und Mittellinie (c1) angrenzt und einen codierten Linsenrasterbereich (38) bildet.

6. Linsenrastermaterial (10) nach Anspruch 5, dadurch gekennzeichnet, dass eine Vielzahl codierter Linsenrasterbereiche (40) aneinander angrenzt, um einen Array codierter Linsenrasterbereiche (38) zu bilden, und dass jeder der codierten Linsenrasterbereiche (40) einen codierten Bereich (12) mit einem ebenen Bereich (22) und mindestens einer Linse (16) umfasst, wobei der ebene Bereich (22) und die Linse (16) durch eine vorbestimmte Breite (w2), Mittellinie (c2) und Höhe (h) bzw. durch eine Breite (w1) und eine Mittellinie (c1) gekennzeichnet sind.

7. Verfahren zum Bilden eines Linsenrastermaterials (10) mit einem Hauptabschnitt (14) und einem darin angeordneten codierten Abschnitt (12), der zur Ausrichtung und Registrierung des Hauptabschnitts (14) dient, wobei das Verfahren das Bereitstellen einer ersten, im wesentlichen ebenen Oberfläche (30) zur Aufnahme eines negativen Linsenrastermaterialmusters und das Bereitstellen eines Schneidwerkzeugs mit einer zweiten Oberfläche (20) einer der Linsenrasterform entsprechenden Geometrie umfasst, **gekennzeichnet durch** folgende Schritte:
- Bearbeiten des negativen Linsenrastermaterialmusters (32) ausschließlich in vorbestimmten Bereichen der ersten Oberfläche (30) durch Eingriffskontakt des Schneidwerkzeugs (20) mit den vorbestimmten Bereichen derart, dass der Hauptabschnitt und der codierte Abschnitt des negativen Linsenrastermaterialmusters ausgebildet werden;
- Erzeugen einer dritten Oberfläche zur Aufnahme des negativen Linsenrastermaterialmusters von der ersten Oberfläche; und
- Aufdrücken des negativen Linsenrastermaterialmusters der ersten Oberfläche auf die dritte Oberfläche und dadurch Ausbilden eines Linsenrastermaterialmusters in der dritten Oberfläche.

## Revendications

1. Dispositif d'éléments lenticulaires (10) comprenant au moins une partie codée (12) jointe à une partie principale (14), dans lesquels la partie codée (12) est positionnée de façon à permettre un alignement et un cadrage en vue de déterminer avec précision l'emplacement de la partie principale (14), et caractérisé en ce que :
la partie principale (14) comprend une pluralité de lenticules (16), chaque lenticule de ladite pluralité de lenticules (16) comprend une section conique cylindrique présentant une hauteur (h), une largeur (w1), et un axe central (c1) défini par le point milieu de la largeur (w1), et
la partie codée comprend une région sensiblement plane présentant une largeur (w2) et un axe central (c2), et
la largeur (w2) de la région sensiblement plane est pratiquement égale à la largeur (w1) de la section conique cylindrique.

2. Dispositif d'éléments lenticulaires (10) selon la revendication 1, caractérisé en ce que les éléments constituent une bande.

3. Dispositif d'éléments lenticulaires (10) selon la revendication 1, caractérisé en ce que les éléments constituent une forme de feuille.

4. Dispositif d'éléments lenticulaires (10) selon la revendication 1, caractérisé en ce que la partie codée (12) comprend une pluralité de régions planes (22), chacune des régions planes (22) étant séparée par au moins une lenticule (16).

5. Dispositf d'éléments lenticulaires (10) selon la revendication 1, caractérisé en ce qu'au moins une partie codée (12) comportant une région plane (22) de largeur (w2) et d'axe central (c2) prédéterminés est jointe à au moins une lenticule (16) présentant une hauteur (h), une largeur (w1) et un axe central (c1) prédéterminés formant une région lenticulaire codée (38).

6. Dispositif d'éléments lenticulaires (10) selon la revendication 5, caractérisé en ce qu'une pluralité de régions lenticulaires codées (40) sont jointes pour former un réseau de régions lenticulaires codées (38), et dans lequel chacune desdites régions lenticulaires codées (40) comprend une partie codée (12) comportant une région plane (22) et au moins une lenticule (16), la région plane (22) et la lenticule (16) étant caractérisées par une largeur (w2) et un axe central (c2) et une hauteur (h), une largeur (w1) et un axe central (c1) prédéterminés, respectivement.

7. Procédé de formation d'éléments lenticulaires (10) comprenant une partie principale (14) et une partie codée (12) dans ceux-ci, la partie codée (12) étant prévue pour un alignement et un cadrage de la partie principale (14), le procédé comprenant les étapes :
fournir une première surface sensiblement plane (30) destinée à recevoir un motif d'éléments lenticulaires négatif,
fournir un outil de coupe comportant une seconde surface (20) d'une géométrie correspondant à la forme lenticulaire, le procédé étant caractérisé par :
usiner le motif d'éléments lenticulaires négatif (32) uniquement dans des régions prédéterminées de la première surface (30) en mettant en contact par engagement ledit outil de coupe (20) avec lesdites régions prédéterminées de façon à former la partie principale et la partie codée du motif d'éléments lenticulaires négatif,
fournir une troisième surface destinée à recevoir le motif d'éléments lenticulaires négatif à partir de la première surface, et
faire une empreinte du motif d'éléments lenticulaires négatif de la première surface en contact avec la troisième surface en formant ainsi un motif d'éléments lenticulaires dans la troisième surface.
